# EUROPÄISCHE PATENTSCHRIFT

(11) **EP 1 517 132 B1**
(45) Veröffentlichungstag und Bekanntmachung des Hinweises auf die Patenterteilung: **30.05.2012**
(21) Anmeldenummer: 04019632.1
(22) Anmeldetag: 18.08.2004
(51) Int. Cl.: G01N 17/00

(54) **Kontaktlose Messung der Oberflächentemperatur von künstlich bewitterten Proben**
Contactless measurement of the surface temperature of a probe exposed to artificial weathering
Mesure sans contact de la température de la surface d'un échantillon exposé aux intempéries artificielles

(30) Priorität: 18.09.2003 DE 10343280
(43) Veröffentlichungstag der Anmeldung: 23.03.2005
(73) Patentinhaber: Atlas Material Technology GmbH, 63589 Linsengericht-Altenhasslau (DE)
(72) Erfinder: Schönlein, Artur, 65428 Rüsselsheim (DE)
(74) Vertreter: Graf Lambsdorff, Matthias

(56) Entgegenhaltungen:
- EP-A- 0 320 209
- JP-A- 9 166 542
- JP-A- 63 061 935
- US-A- 4 874 952
- USDA FOREST SERVICE, FOREST PRODUCTS LABORATORY: "Quantification and Prediction for Aging of Printing and Writing Papers Exposed to Light", , [Online] August 2000 (2000-08), pages 1-151, Madison, Wisconsin, USA Retrieved from the Internet: URL:www.fpl.fs.fed.us/documnts/pdf2003/fpl 03a.pdf> [retrieved on 2007-10-01]

## Beschreibung

Die vorliegende Erfindung betrifft ein Verfahren zur Bewertung des witterungsbedingten Alterungsverhalten einer Probe, bei welchem die Probe einer natürlichen oder einer künstlichen Bewitterung ausgesetzt wird. Ebenso bezieht sich die Erfindung auf eine Vorrichtung zur künstlichen Bewitterung von Proben.

In Vorrichtungen zur künstlichen Bewitterung von Werkstoffproben soll die Lebensdauer von Werkstoffen abgeschätzt werden, die in ihrer Anwendung ständig den natürlichen Wetterverhältnissen ausgesetzt sind und sich somit unter klimatischen Einflüssen wie Sonnenlicht, Sonnenwärme, Feuchtigkeit und dgl. verschlechtern. Um eine gute Simulation der natürlichen Witterungsgegebenheiten zu erhalten, muss die spektrale Energieverteilung des in der Vorrichtung erzeugten Lichtes möglichst derjenigen der natürlichen Sonnenstrahlung entsprechen, aus welchem Grund in solchen Geräten als Strahlenquellen Xenonstrahler eingesetzt werden. Eine zeitraffende Alterungsprüfung der Werkstoffe wird im Wesentlichen durch eine gegenüber den natürlichen Verhältnissen stark intensivierte Bestrahlung der Proben erzielt, durch die die Alterung der Proben beschleunigt wird. Somit lässt sich nach verhältnismäßig kurzer Zeit eine Aussage über das Langzeit-Alterungsverhalten einer Werkstoffprobe machen.

Ein Großteil der in künstlichen Bewitterungsgeräten untersuchten Proben bestehen aus polymeren Werkstoffen. Bei diesen wird die witterungsbedingte Verschlechterung im Wesentlichen durch den UV-Anteil der Sonnenstrahlung hervorgerufen. Die dabei ablaufenden fotochemischen Primärprozesse, also die Absorption von Photonen und die Erzeugung angeregter Zustände oder freier Radikale, sind temperaturunabhängig. Dagegen können die nachfolgenden Reaktionsschritte mit den Polymeren oder Additiven temperaturabhängig sein, so dass die beobachtete Alterung der Werkstoffe ebenfalls temperaturabhängig ist. Der Grad der Temperaturabhängigkeit ist vom Werkstoff und der betrachteten Eigenschaftsänderung abhängig.

Um dieser Tatsache Rechnung zu tragen, wird im Allgemeinen bei der künstlichen Bewitterung von polymeren Werkstoffen die Raumtemperatur und/oder die Probentemperatur konstant gehalten. Die Konstanthaltung und die Kenntnis der Temperaturen sind wegen der Temperaturabhängigkeit der Alterung notwendig, um die Resultate verschiedener Bewitterungsläufe untereinander vergleichen zu können.

Da bisher nicht in Betracht gezogen wurde, die Probentemperatur der zu untersuchenden Werkstoffproben direkt zu messen, werden in Bewitterungsgeräten Temperatursensoren eingesetzt, deren gemessene Temperatur als ein Maß für die Probentemperatur verwendet wird. Beispielsweise kann ein Schwarztafelsensor als ein derartiger Temperatursensor zum Einsatz kommen. In der Druckschrift EP 0 320 209 A2 wird ein Bewitterungsgerät beschrieben, welches eine Bewitterungskammer aufweist, in der eine Xenonlampe als Lichtquelle zur Abgabe von Licht mit einer vorbestimmten Intensität vorgesehen ist. Innerhalb der Bewitterungskammer befindet sich ein zylindersymmetrischer Probenhalterrahmen, der um die Lichtquelle drehbar ist. Von diesem Probenhalterrahmen werden sowohl zu untersuchende Werkstoffproben als auch Schwarztafelsensoren getragen. Die Werkstoffproben und die Schwarztafelsensoren sind somit unter gleichen Bedingungen dem Strahlungsfeld der Lichtquelle und den übrigen, innerhalb der Bewitterungskammer eingestellten Bedingungen ausgesetzt. Um die Probentemperatur innerhalb bestimmter Grenzen steuern zu können und um sie innerhalb der Bewitterungskammer zu vergleichsmäßigen, wird zusätzlich ein Luftstrom in die Bewitterungskammer eingeleitet, der zylindersymmetrisch bezüglich der Lichtquelle an dem Probenhalterrahmen und den darin gehalterten Werkstoffproben und Schwarztafelsensoren vorbeistreicht. Der Luftstrom führt dabei einen Teil der Wärme der Werkstoffproben und Schwarztafelsensoren ab. Dies kann für eine Temperaturregelung ausgenutzt werden, indem die von den Schwarztafelsensoren gemessene Temperatur als Regelsignal für die Stärke des in die Bewitterungskammer eingeleiteten Luftstroms verwendet wird.

Die als Temperatursensoren verwendeten Schwarztafelsensoren, Schwarzstandardsensoren und Weißstandardsensoren sind sämtlich so aufgebaut, dass sie eine Metallplatte mit einer im Betrieb der Lichtquelle zugewandten lackierten Oberfläche und ein an die Metallplatte auf deren Rückseite thermisch angekoppeltes temperaturabhängiges elektrisches Bauelement aufweisen. Das elektrische Bauelement wird dabei in der Regel durch einen temperaturabhängigen Widerstand wie einen Platinwiderstand (handelsübliche Bezeichnungen Pt100 oder Pt1000) gebildet und ist mit einer elektrischen Messumformerschaltung verbunden.

Ein Schwarzstandardsensor weist im Einzelnen eine einseitig schwarz lackierte Edelstahlplatte (Dicke 1 mm), einen an der unbeschichteten Rückseite thermisch angekoppelten Pt100- oder Pt1000-Widerstand, eine auf die Rückseite aufgebrachte und den Platinwiderstand umschließende Kunststoffplatte aus PVDF (Polyvinylidenfluorid) und eine Abschlussplatte aus Edelstahl auf. Ein Weißstandardsensor ist in entsprechender Weise aufgebaut, mit dem Unterschied, dass die im Betrieb der Lichtquelle zugewandte Oberfläche weiß lackiert ist. Ein Schwarztafelsensor besteht im Unterschied zu dem Schwarzstandardsensor aus einer beidseitig geschwärzten Metallplatte ohne PVDF-Isolierung. Der temperaturabhängige Widerstand ist ohne umgebende Isolierung auf die Rückseite aufgebracht.

In Bewitterungsgeräten nach heutigem Standard werden Schwarzstandard- oder Schwarztafelsensoren eingesetzt, um für jeden Bewitterungsprozess eine Schwarzstandardtemperatur angeben zu können. Die Schwarzstandardtemperatur stellt eine obere Grenze für den in Frage kommenden Bereich der Oberflächentemperatur der Werkstoffprobe dar. Zusätzlich wird oftmals ein Weißstandardsensor eingesetzt, dessen Temperaturmessung eine untere Grenze dieses Bereichs bereitstellt. Somit kann die Probentemperatur eingegrenzt werden und es kann gegebenenfalls als erste Näherung für die Probentemperatur der arithmetische Mittelwert der gemessenen Temperaturen angenommen werden.

Der Nachteil dieses konventionellen Temperaturmessverfahrens besteht darin, dass die Oberflächentemperatur der Probe nicht präzise genug eingegrenzt werden kann. Die heutigen Anforderungen an die Vergleichbarkeit und Reproduzierbarkeit von Bewitterungsläufen bringen erhöhte Anforderungen an die Genauigkeit der Temperaturmessung mit sich. Diesen Anforderungen wird das konventionelle Temperaturmessverfahren nur noch bedingt gerecht.

Die Druckschrift EP-A-0 320 209 beschreibt ein Testsystem zur beschleunigten Bewitterung von Proben. Innerhalb einer Bewitterungskammer ist ein Halterungsrahmen angeordnet, welcher sich um eine zentrale Strahlungsquelle dreht und an welchem zu untersuchende Proben befestigt sind. Ebenfalls befestigt an dem Halterungsrahmen ist ein Schwarztafelsensor, mit welchem eine Temperatur gemessen werden soll. Es wird erwähnt, dass die Temperatur des. Schwarztafelsensors auch kontaktlos erfasst werden kann.

Die Druckschrift USDA FOREST SERVICE, FOREST PRODUCTS LABORATORY: "Quantification and Prediction for Aging of Printing and Writing Papers Exposed to Light" [Online], August 2000 (2000-08), Seiten 1-151, Madison, Wisconsin, USA, offenbart ein Verfahren zur Bewertung des witterungsbedingten Alterungsverhaltens einer Probe, bei welchem die Probe einer natürlichen oder einen künstlichen Bewitterung ausgesetzt wird und die Oberflächentemperatur der Probe während der Bewitterung kontaktlos gemessen wird.

Die Druckschrift US-A-4,874,952 beschreibt eine Einrichtung zur beschleunigten Fotodegradation von polymerhaltigen Materialien in welcher Materialproben der gleichzeitigen Einwirkung ultravioletter Strahlung, Hitze und Sauerstoff ausgesetzt werden. Um dafür Sorge zu tragen, dass die Temperatur der zu untersuchenden Materialproben auf einem konstanten und bekannten Wert während des Tests gehalten werden, wird ein Schwarzkörpersensor in der Testkammer aufbewahrt, dessen Temperatur stets höher als die der Materialproben ist.

Es ist demzufolge Aufgabe der vorliegenden Erfindung, die Genauigkeit der Messung der Oberflächentemperatur von künstlich bewitterten Proben während der Bewitterung zu steigern.

Diese Aufgabe wird durch ein Verfahren mit den Merkmalen des Patentanspruchs 1 gelöst. Vorteilhafte Weiterbildungen und Ausgestaltungen sind Gegenstand von abhängigen Ansprüchen. Die Aufgabe wird ebenfalls durch eine Vorrichtung mit den Merkmalen des Patentanspruchs 7 gelöst.

Das erfindungsgemäße Verfahren zur Bewertung des witterungsbedingten Alterungsverhaltens einer Probe bezieht sich sowohl auf natürliche wie auf künstliche Bewitterungsverfahren. Ein wesentlicher Gedanke der vorliegenden Erfindung besteht darin, die Oberflächentemperatur der Probe während der Bewitterung direkt zu messen. Dies wird durch ein kontaktloses Temperaturmessverfahren ermöglicht.

Da somit die Oberflächentemperatur der Probe nicht mehr wie bisher durch Hilfsmittel wie Schwarz- oder Weißstandardsensoren eingegrenzt sondern durch Messung an der Probe selbst bestimmt wird, besteht die Möglichkeit, die Oberflächentemperatur während der Bewitterung präziser zu bestimmen.

Zudem entfällt die Notwendigkeit der Bereitstellung besagter Schwarz- oder Weißstandardsensoren oder Schwarztafelsensoren und deren aufwändige Kalibrierung vor Einsatz in einem Bewitterungsprüfgerät.

Das erfindungsgemäße Verfahren der kontaktlosen Temperaturmessung wird durch Erfassen der Schwarzkörperstrahlung der Probenoberfläche und dem Bestimmen der Oberflächentemperatur aus der Intensität und/oder der spektralen Verteilung der erfassten Schwarzkörperstrahlung erreicht. Dies kann mit einem handelsüblichen Pyrometer erfolgen, welches zumindest in dem dem interessierenden Temperaturbereich entsprechenden Messbereich kalibriert ist. Mit dem Pyrometer kann unter einem bestimmten Winkel zu der Probe ein Messfleck auf der Probenoberfläche fixiert und die von diesem Messfleck in den entsprechenden Raumwinkel emittierte Schwarzkörperstrahlung erfasst und daraus die Oberflächentemperatur bestimmt werden.

Wenn die kontaktlose Temperaturmessung durch Messung der Schwarzkörperstrahlung erfolgt, so setzt dies prinzipiell voraus, dass der Strahlungsemissionsgrad oder die Strahlungsemissivität des Oberflächenmaterials der Probe bekannt ist, da die die Schwarzkörperstrahlung emittierende Oberfläche der Probe nicht die Eigenschaften eines idealen schwarzen Strahlers (ε = 1) aufweist und die Emissivität ε stets kleiner als 1 ist. Auch sollte die Winkelabhängigkeit der Emissivität des Probenmaterials bekannt sein, da wie oben erwähnt, die in einen bestimmten Raumwinkel abgestrahlte Schwarzkörperstrahlung von dem Pyrometer erfasst wird.

Bezüglich der Emissivitätswerte der zu bewitternden Proben und Werkstücke kann zum einen in aufwandsgünstiger Weise auf Erfahrungswerte z.B. Tabellenwerte der Literatur zurückgegriffen werden. Es kann jedoch ebenso vorgesehen sein, die Emissivitäten der Proben vor der eigentlichen Bewitterung durch ein geeignetes Verfahren zu bestimmen. Da hierbei die tatsächlichen Emissivitätswerte der Proben ermittelt werden, erlaubt dies eine recht genaue Bestimmung der Oberflächentemperatur aus der erfassten Schwarzkörperstrahlung.

Selbst wenn die Emissivität des Probenmaterials nicht vorher experimentell bestimmt wird, und somit nicht genau bekannt ist, kann durch Verwendung eines angenommenen Emissivitätswertes die Bestimmung der Oberflächentemperatur aus der erfassten Schwarzkörperstrahlung besser angenähert werden als bei dem konventionellen Verfahren, bei dem durch Schwarz- und Weißstandardsensoren nur ein relativ großer Bereich zwischen einer oberen und einer unteren Grenztemperatur angegeben werden kann.

In heutigen Vorrichtungen zur künstlichen Bewitterung wird in der Regel eine Anzahl von zu bewitternden Probestücken an einem ringförmig geschlossenen Halterungsrahmen befestigt, der in eine Drehbewegung um eine zentral angeordnete Strahlungsquelle wie einen Xenonstrahler versetzt wird. Ein Detektor zur Erfassung der Schwarzkörperstrahlung, wie ein Pyrometer, kann darin so angeordnet werden, dass es einen ortsfesten Messfleck fixiert, der von den Proben bei ihrer Kreisbewegung durchlaufen wird. Für jede Probe ist dann ein Emissivitätswert gespeichert, so dass aus der von ihr emittierten Schwarzkörperstrahlung und ihrer Emissivität die Oberflächentemperatur bestimmt werden kann. Dabei kann vorgesehen sein, dass die aktuelle Winkelposition des Halterungsrahmens dafür verwendet wird, die von dem Pyrometer erfasste Schwarzkörperstrahlung einer bestimmten Probe zuzuordnen. Der zu dieser Probe gespeicherte Emissivitätswert kann dann herangezogen werden, um aus der erfassten Schwarzkörperstrahlung die Oberflächentemperatur zu bestimmen.

Eine erfindungsgemäße Vorrichtung zur künstlichen Bewitterung von Proben weist eine Bewitterungskammer, in welcher eine Strahlungsquelle und Halterungsmittel für die Halterung von zu bewitternden Proben enthalten sind, und einen kontaktlosen Temperatursensor auf. Der kontaktlose Temperatursensor ist dabei insbesondere durch einen Schwarzstrahlungsdetektor wie ein (kalibriertes) Pyrometer gegeben.

Die Halterungsmittel können in an sich bekannter Weise durch einen ringförmig geschlossenen Halterungsrahmen gebildet sein, welcher konzentrisch um eine Strahlungsquelle angeordnet ist, und in eine Drehbewegung um die Strahlungsquelle versetzbar ist. Der kontaktlose Temperatursensor ist dann vorzugsweise räumlich und in seiner Ausrichtung feststehend, so dass er auf einen ortsfesten Raumbereich ausgerichtet ist. Eine oder mehrere der in dem Halterungsrahmen gehalterten zu bewitternden Proben durchlaufen bei der Drehbewegung des Halterungsrahmens um die Strahlungsquelle den ortsfesten Raumbereich periodisch und werden bei jedem Durchlaufen von dem kontaktlosen Temperatursensor erfasst. Im Falle eines Schwarzstrahlungsdetektor wird bei jedem Durchlaufen einer Probe durch den ortsfesten Raumbereich Schwarzkörperstrahlung der Probe in Richtung auf den Schwarzstrahlungsdetektor emittiert und von diesem erfasst.

Wenn der Temperatursensor durch einen Schwarzstrahlungsdetektor gegeben ist, so können in einer an diesen angeschlossenen Auswerteschaltung Werte für die Strahlungsemissivität der Proben speicherbar sein. Jedes Mal wenn die Schwarzstrahlung einer bestimmten Probe erfasst worden ist, so wird deren Intensität und/oder spektrale Verteilung mit dem zugehörigen Emissivitätswert zu der Oberflächentemperatur der Probe verrechnet.

Durch die Winkelposition des Halterungsrahmens ist die aktuell in dem ortsfesten Raumbereich befindliche Probe identifizierbar.

Im Folgenden wird anhand eines einzigen Ausführungsbeispiels die vorliegende Erfindung anhand der Zeichnungsfigur näher erläutert.

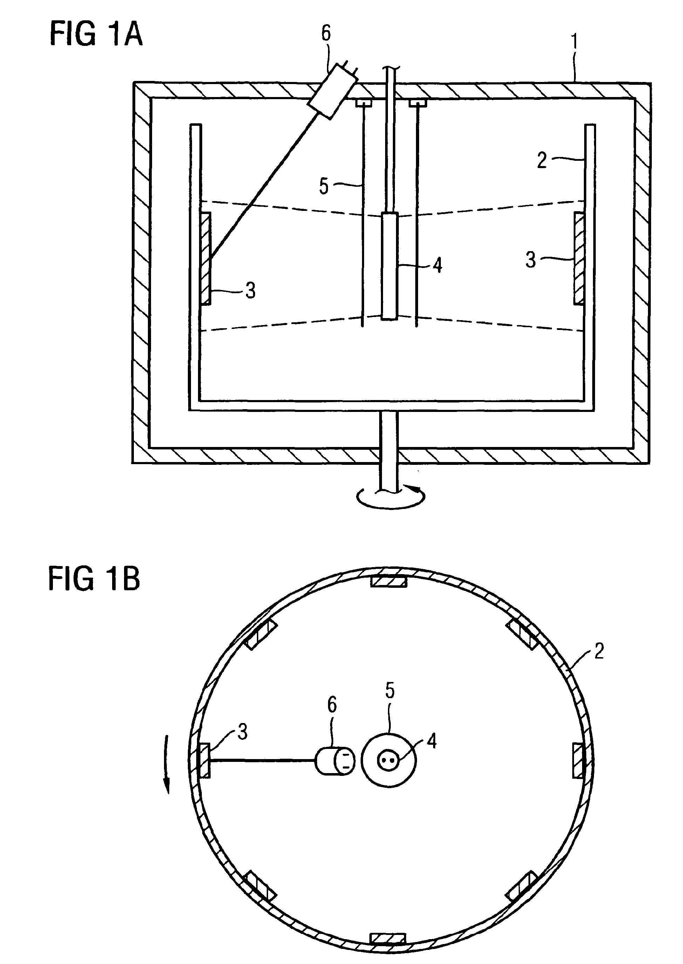

In den Figuren 1a, 1b ist ein erfindungsgemäßes Bewitterungsprüfgerät in einem Längsschnitt (Fig. 1a) und in einer Draufsicht (1b) dargestellt.

In einer Bewitterungskammer 1 ist ein ringförmig geschlossener Halterungsrahmen 2 drehbar gelagert, an dessen Innenwand Proben 3 oder Werkstücke gehaltert werden können. Der Halterungsrahmen 2 ist insbesondere im Querschnitt kreisförmig. Auf der Zylinder- und Drehachse des Halterungsrahmens 2 ist eine länglich ausgedehnte Xenonstrahlungsquelle 4 positioniert, die an einer Innenwand der Bewitterungskammer 1 fixiert ist . Die Xenonstrahlungsquelle 4 dient dazu, eine Strahlung vergleichbar der natürlichen Sonnenstrahlung abzugeben und damit die Proben 3 zu beaufschlagen. Die Xenonstrahlungsquelle 4 ist von einem rohrförmigen Filter 5 umgeben, das an die jeweilige Bewitterungsprüfung angepasst wird.

Die Bewitterungskammer kann in an sich bekannter Weise weitere Einrichtungen zur künstlichen Bewitterung wie beispielsweise Feuchtigkeitserzeuger oder dergleichen aufweisen, die für die vorliegende Erfindung keine wesentliche Rolle spielen und auf die daher nicht weiter eingegangen werden soll. Es kann auch ein Luftstrom in die Bewitterungskammer 1 eingeleitet werden, der in vertikaler Richtung an den Proben 3 vorbei streicht.

Der Halterungsrahmen 2 ist vorzugsweise derart drehbar gelagert, dass die Drehachse mit der Achse der Xenonstrahlungsquelle 4 zusammen fällt, so dass die Proben 3 sich im Wesentlichen auf einer Kreisbahn mit gleichbleibendem Abstand von der Xenonstrahlungsquelle 4 um diese bewegen.

In dem gezeigten Ausführungsbeispiel ist in der oberen Wand der Bewitterungskammer 1 eine Öffnung geformt, in die von außen ein Pyrometer 6 eingesetzt werden kann. Alternativ dazu kann auch vorgesehen sein, dass das Pyrometer vollständig innerhalb der Bewitterungskammer 1 an geeigneter Position angeordnet wird. Das Ausführungsbeispiel der Fig. 1a zeigt ferner, dass das Pyrometer 6 in einer festen Position auf eine Probe 3 ausgerichtet ist und die von dieser emittierte Schwarzkörperstrahlung erfasst. Die Schwarzkörperstrahlung wird somit stets unter einem schrägen Winkel zur Horizontalen von dem Pyrometer 6 erfasst.

Das Pyrometer 6 ist somit auf einen ortsfesten Raumbereich fixiert, den die Proben 3 periodisch bei ihrer Kreisbewegung durchlaufen. Aus der Draufsicht der Fig. 1b wird deutlich, dass somit von dem Pyrometer 6 die von einer Probe 3 emittierte Schwarzkörperstrahlung innerhalb von Zeitabschnitten detektiert werden kann, deren Länge durch die Drehgeschwindigkeit des Halterungsrahmens 2 und die Breite der Probe 3 bestimmt wird. Nach Beendigung eines derartigen Zeitabschnitts kann aus der erfassten Schwarzkörperstrahlung unter Verwendung der für die jeweilige Probe 3 gespeicherten Emissivität die Oberflächentemperatur in einer an das Pyrometer 6 angeschlossenen Auswerteschaltung errechnet werden. In der Auswerteschaltung können die Emissivitätswerte der an dem Halterungsrahmen 2 befestigten Proben 3 gespeichert sein. Nach Erfassen der Schwarzkörperstrahlung muss zunächst die Probe 3 identifiziert werden, um den zu dieser Probe 3 abgespeicherten Emissivitätswert erhalten zu können. Zu diesem Zweck kann die Winkelposition des Halterungsrahmens 2 in geeigneter Weise bestimmt werden und es kann vorab in einer Tabelle festgelegt werden, bei welchen gemessenen Winkelpositionen des Halterungsrahmens 2 welche Proben 3 sich gerade in dem ortsfesten Messbereich des Pyrometers 6 befinden. Nachdem somit die Probe 3 identifiziert worden ist, die innerhalb des zeitlichen Messfensters die Schwarzkörperstrahlung emittiert hat, wird der der Probe 3 entsprechende Emissivitätswert mit der Intensitäts- und/oder der spektralen Verteilung der Schwarzkörperstrahlung verrechnet, um daraus die Oberflächentemperatur der Probe 3 zu erhalten.

Das Pyrometer 6 ist vorzugsweise für einen Messbereich zwischen 8 µm und 14 µm im Temperaturbereich von 20 - 120 °C kalibriert.

Die Oberflächentemperatur jeder Probe 3 wird vorzugsweise laufend während des Bewitterungslaufs aufgezeichnet.

Das erfindungsgemäße Verfahren ist im Prinzip auch auf natürliche Bewitterungsverfahren anwendbar. Auch hier kann vorgesehen sein, dass Proben oder Werktstücke an einem Halterungsrahmen befestigt werden und auf einer geschlossenen Bahn an einem Temperatursensor wie einem Pyrometer vorbeigeführt werden, so dass die Notwendigkeit entfällt, dass das Pyrometer im ständigen Wechsel seiner Ausrichtung auf die verschiedenen Proben ausgerichtet werden muss.

## Patentansprüche

1. Verfahren zur Bewertung des witterungsbedingten Alterungsverhaltens einer Probe, bei welchem
- die Probe (3) einer künstlichen Bewitterung ausgesetzt wird, und
- die Oberflächentemperatur der Probe (3) während der Bewitterung kontaktlos gemessen wird,
- die Schwarzkörperstrahlung der Probenoberfläche erfasst und aus dieser unter Berücksichtung eines angenommenen oder experimentell ermittelten Wertes für die Strahlungsemissivität der Probe (3) die Oberflächentemperatur bestimmt wird, **dadurch gekennzeichnet, dass**
- die Probe (3) während der Bewitterung durch den Raum konzentrisch um eine Strahlungsquelle (4) bewegt wird,
- die Schwarzkörperstrahlung von einem ortsfesten Raumbereich erfasst wird, und
- die Probe (3) derart bewegt wird, dass ihre Probenoberfläche periodisch den ortsfesten Raumbereich durchläuft.

2. Verfahren nach Anspruch 1,
**dadurch gekennzeichnet, dass**
- die Messung der Schwarzkörperstrahlung mit einem kalibrierten Pyrometer (6) durchgeführt wird.

3. Verfahren nach Anspruch 1 oder 2,
**dadurch gekennzeichnet, dass**
- die innerhalb eines definierten Raumwinkels von der Oberfläche emittierte Schwarzkörperstrahlung gemessen wird.

4. Verfahren nach einem der Ansprüche 1 bis 3, **dadurch gekennzeichnet, dass**
- die Probe (3) bei einer künstlichen Bewitterung auf einer geschlossenen Bahn um eine Strahlungsquelle bewegt wird.

5. Verfahren nach einem der Ansprüche 1 bis 4,
**dadurch gekennzeichnet, dass**
- eine Anzahl von Proben (3) gleichzeitig bewittert wird, welche an einem ringförmig geschlossenen Halterungsrahmen (2) befestigt sind.

6. Verfahren nach Anspruch 5,
**dadurch gekennzeichnet, dass**
- vor der Bewitterung Strahlungsemissivitätswerte für die Proben (3) gespeichert werden, und
- anhand der Winkelposition des Halterungsrahmens (2) die aktuell in dem ortsfesten Raumbereich befindliche Probe (3) identifiziert wird, und
- für die Temperaturberechnung die erfasste Schwarzkörperstrahlung und der für die Probe (3) gespeicherte Strahlungsemissivitätswert herangezogen wird.

7. Vorrichtung zur künstlichen Bewitterung von Proben, mit
- einer Bewitterungskammer (1), in welcher eine Strahlungsquelle (4) und Halterungsmittel (2) für die Halterung von zu bewitternden Proben (3) enthalten sind,
- die Halterungsmittel (2) durch einen ringförmig geschlossenen Halterungsrahmen (2) gebildet sind, welcher konzentrisch um die Strahlungsquelle (4) angeordnet ist und in eine Drehbewegung um die Strahlungsquelle (4) versetzbar ist, und
- ein kontaktlos messender Temperatursensor (6) vorhanden ist,
**dadurch gekennzeichnet, dass**
- der Temperatursensor (6) auf einen ortsfesten Raumbereich ausgerichtet ist, und
- der Halterungsrahmen (2) so gebildet ist, dass eine oder mehrere in ihm gehalterte Proben (3) bei der Drehbewegung den ortsfesten Raumbereich periodisch durchlaufen.

8. Vorrichtung nach Anspruch 7,
**dadurch gekennzeichnet, dass** der kontaktlos messende Temperatursensor (6) ein Schwarzstrahlungsdetektor, insbesondere ein Pyrometer (6), ist.

9. Vorrichtung nach Anspruch 7 oder 8,
**dadurch gekennzeichnet, dass**
- in einer an den Schwarzstrahlungsdetektor (6) angeschlossenen Auswerteschaltung Werte für die Strahlungsemissivität der Proben (3) speicherbar sind.

10. Vorrichtung nach einem der Ansprüche 7 bis 9,
**dadurch gekennzeichnet, dass**
- aus der Winkelposition des Halterungsrahmens (2) die aktuell in dem ortsfesten Raumbereich befindliche Probe (3) identifizierbar ist.

11. Vorrichtung nach einem der Ansprüche 7 bis 10,
**dadurch gekennzeichnet, dass**
- der Temperatursensor (6) stets in einem schrägen Winkel zur Horizontalen zu der oder den Proben (3) ausgerichtet ist.

## Claims

1. A method for evaluating the weather-dependent aging of a sample, in which
- the sample (3) is exposed to an artificial weathering,
- the surface temperature of the sample (3) is contactlessly measured during the weathering,
- the black-body radiation of the sample surface is detected and the surface temperature is determined therefrom on the basis of an assumed or experimentally determined value of the radiation emissivity of the sample,
**characterized in that**
- the sample (3) is moved through space concentrically around a radiation source (4),
- the black-body radiation is detected from a stationary region of space, and
- the sample (3) is moved such that its sample surface periodically passes the stationary region of space.

2. The method according to claim 1,
**characterized in that**
- the measurement of the black-body radiation is performed with a calibrated pyrometer (6).

3. The method according to claim 1 or 2,
**characterized in that**
- the black-body radiation is measured which is emitted by the surface in a defined solid angle.

4. The method according to anyone of claims 1 to 3,
**characterized in that**
- the sample (3) is moved on a closed path around a radiation source.

5. The method according to anyone of claims 1 to 4,
**characterized in that**
- a number of samples (3), which are fastened to a holding frame (2) closed in a ring shape, are weathered simultaneously.

6. The method according to claim 5,
**characterized in that**
- radiation emissivity values for the samples are stored before the weathering,
- the sample currently located in the stationary region of space is identified with the aid of the angular position of the holding frame, and
- the recorded black-body radiation and the radiation emissivity value stored for the sample are employed for the temperature calculation.

7. Device for the artificial weathering of samples, comprising
- a weathering chamber (1) which contains a radiation source (4) and holding means (2) for holding samples (3) to be weathered,
- the holding means (2) being formed by a holding frame (2) closed in a ring shape, which is arranged concentrically around the radiation source (4) and to which a rotational movement around the radiation source (4) can be imparted, and
- a contactlessly measuring temperature sensor (6),
**characterized in that**
- the temperature sensor (6) is aimed at a stationary region of space, and
- the holding frame (2) is designed so that one or more samples (3) which it holds pass periodically through the stationary region of space during the rotational movement.

8. The device according to claim 7,
**characterized in that**
- the contactlessly measuring temperature sensor (6) is a black-body radiation detector, in particular a pyrometer (6).

9. The device according to claim 7 or 8,
**characterized in that**
- values for the radiation emissivity of the samples (3) can be stored in an evaluation circuit connected to the black-body radiation detector (6).

10. The device according to anyone of claims 7 to 9,
**characterized in that**
- the sample (3) currently located in the stationary region of space can be identified from the angular position of the holding frame (2).

11. The device according to anyone of claims 7 to 10,
**characterized in that**
- the temperature sensor (6) is always aimed at the sample or samples (3) with an oblique angle to the horizontal.

## Revendications

1. Procédé pour l'évaluation du comportement au vieillissement d'un échantillon sous des conditions soumises aux intempéries, dans lequel :
- l'échantillon (3) est exposé à des intempéries artificielles, et
- la température surfacique de l'échantillon (3) est mesurée sans contact pendant les intempéries,
- le rayonnement du corps noir de la surface de l'échantillon saisit et la température surfacique est déterminée sous la prise en considération depuis une valeur supposée ou déterminée par expérience pour l'émissivité de rayonnement de l'échantillon (3)
**caractérisé en ce que** :
- l'échantillon (3) est déplacé pendant les intempéries à travers la pièce de manière concentrique autour d'une source de rayonnement (4),
- le rayonnement du corps noir est saisi par une zone de la pièce à lieu fixe et
- l'échantillon (3) est déplacé de telle sorte que sa surface d'échantillon traverse périodiquement la zone de la pièce à lieu fixe.

2. Procédé selon la revendication 1
**caractérisé en ce que** :
- la mesure du rayonnement du corps noir est exécutée avec un pyromètre calibré (6).

3. Procédé selon l'une ou l'autre des revendications 1 et 2
**caractérisé en ce que** :
- le rayonnement du corps noir qui est émis par la surface à l'intérieur d'un angle défini de la pièce est mesuré.

4. Procédé selon l'une des revendications 1 à 3
**caractérisé en ce que** :
- l'échantillon (3) est déplacé lors d'intempéries artificielles sur une trajectoire fermée autour d'une source de rayonnement.

5. Procédé selon l'une des revendications 1 à 4
**caractérisé en ce que** :
- un nombre d'échantillons (3) est exposé simultanément aux intempéries et lesquels sont fixés sur un cadre de maintien fermé en forme d'anneau (2).

6. Procédé selon la revendication 5
**caractérisé en ce que** :
- avant les intempéries, les valeurs d'émissivité du rayonnement sont mémorisées pour les échantillons (3), et
- à l'aide de la position angulaire du cadre de maintien (2), l'échantillon (3) qui se trouve dans la zone de la pièce à lieu fixe est identifié actuellement, et
- pour le calcul de la température, le rayonnement du corps noir saisi et la valeur d'émissivité du rayonnement mémorisée pour l'échantillon (3) est prise en considération.

7. Dispositif pour l'exposition aux intempéries artificielles des échantillons, comprenant :
- une chambre d'exposition aux intempéries (1) dans laquelle une source de rayonnement (4) et un moyen de maintien (2) sont contenus pour le maintien des échantillons (3) devant être exposés aux intempéries.
- les moyens de maintien (2) sont formés par un cadre de maintien fermé et en forme d'anneau (2) qui est agencé concentriquement autour de la source de rayonnement (4) et peut être déplacé dans un mouvement de rotation autour de la source de rayonnement (4), et
- un capteur de température qui mesure sans contact (6) est présent,
**caractérisé en ce que** :
- le capteur de température (6) est orienté sur une zone de la pièce à lieu fixe, et
- le cadre de maintien (2) est réalisé de telle sorte qu'un ou plusieurs échantillons (3) qui sont maintenus dedans traversent périodiquement la zone de la pièce à lieu fixe pendant le mouvement de rotation.

8. Dispositif selon la revendication 7,
**caractérisé en ce que** :
- le capteur de température qui mesure sans contact (6) est un détecteur de rayonnement noir, en particulier un pyromètre (6).

9. Dispositif selon l'une ou l'autre des revendications 7 et 8
**caractérisé en ce que** :
- dans un circuit d'évaluation qui est connecté au détecteur de rayonnement noir (6), il est possible de mémoriser des valeurs pour l'émissivité de rayonnement des échantillons (3).

10. Dispositif selon l'une des revendications 7 à 9
**caractérisé en ce que** :
- depuis la position angulaire du cadre de maintien (2), il est possible d'identifier l'échantillon (3) qui se trouve actuellement dans la zone de la pièce à lieu fixe.

11. Dispositif selon l'une des revendications 7 à 10
**caractérisé en ce que** :
- le capteur de température (6) est toujours orienté sous un angle oblique par rapport à l'horizontale vers l'échantillon (3) ou vers les échantillons (3).
